# EUROPEAN PATENT SPECIFICATION

(11) **EP 0 968 852 B1**
(45) Date of publication and mention of the grant of the patent: **27.08.2003**
(21) Application number: 99304993.1
(22) Date of filing: 24.06.1999
(51) Int. Cl.: B60D 1/04, B60D 1/28

(54) **Coupling device**
Kupplungsvorrichtung
Dispositif d'attelage

(30) Priority: 24.06.1998 GB 9813473
(43) Date of publication of application: 05.01.2000
(73) Proprietor: BRADLEY DOUBLELOCK LIMITED, West Yorkshire. BD16 2NH (GB)
(72) Inventor: Child, Craig, Kneighley BD21 4AR (GB)
(74) Representative: Brierley, Anthony Paul

(56) References cited:
- AT-B- 310 571
- FR-A- 934 634
- US-A- 2 397 558
- US-A- 2 597 096
- US-A- 4 747 612

## Description

This invention relates to a coupling device and particularly, although not exclusively, relates to a coupling device for securing a towing vehicle and a towable vehicle together.

There are many different types of coupling devices for towing/towable vehicles. One such device is described in GB2076765.

Disadvantageously, the device of GB 2078765 requires a pin of a jaw coupling to be manually inserted by an operator. This is potentially difficult and/or dangerous since a towing vehicle and towable vehicle must be carefully moved towards one another and suitably positioned before the pin can be inserted. Additionally, there are risks that fingers or other body parts may become trapped during the operation.

It is an object of the present invention to address problems associated with known coupling device.

US 2,397,558 discloses a coupling device comprising a jaw for receiving a coupling member attached to a towable vehicle and a securement means for retaining the coupling member in a position of securement to the coupling device, wherein said securement means is pivotable between an operative position in which it may retain the coupling member in position and an inoperative position, and restrictor means for restricting movement of said securement means away from said operative position, the restrictor means arranged to extend into an opening, for example in said securement means.

The present invention is characterised in that guide means is provided for defining a travel path for said restrictor means in a first rotational direction and movement of the restrictor means in the direction of extent of the axis about which the rotational movement takes place.

Said jaw suitably comprises a first surface which slopes upwardly in use and a second surface, spaced from said first surface which slopes downwardly in use. Said first and second surfaces preferably diverge away from one another towards a mouth area into which a coupling member may be inserted for initial engagement with the coupling device.

Said coupling device preferably includes a ball of a ball coupling means which is suitably positioned above said first and second surfaces. Said ball-coupling means preferably extends away from said surfaces in a direction which extends transversely to the direction of insertion of the coupling member into said jaw.

Said coupling device suitably includes means for securing it to a towing vehicle. Such means may include a back plate which is suitably substantially planar and is suitably arranged so that the direction of insertion of the coupling member into said jaw is substantially transverse to said plane of said back plate. Said coupling device is suitably arranged to be secured to the rear of a towable vehicle.

Said device preferably includes an activation means for activating movement of said securement means from said inoperative position to said operative position. Said activation means may comprise an activation member which is suitably arranged to be contacted by a coupling member during engagement of the coupling member with said coupling device. Contact with said coupling member suitably causes, preferably initiates, movement of the securement means between said inoperative and operative positions. Said activation member is preferably arranged within said jaw at least when said securement means is in said inoperative position. Said activation member may be arranged to be moved away from said mouth of said jaw, suitably towards a means for securing the coupling device to a towing vehicle on contact with the coupling member.

Said activation means is preferably movable between an operative position in which it can be contacted by the coupling member as described and an inoperative position wherein it cannot be contacted as described. Said activation means is preferably pivotably mounted, suitably for movement between its operative and inoperative positions. The pivot axes of said activation means and said securement means are preferably co-axial. Said activation member is preferably positioned generally above the axis.

Preferably, said securement means is operatively connected to said activation means. More preferably, said activation means is an integral and/or unitary part of said securement means.

Preferably, said securement means includes a hook-shaped part which is suitably arranged to retain the coupling member in position when said securement means is in said operative position. Said hook-shaped part is preferably arranged to extend, in use, into a part of the coupling member, for example an eye-shaft thereof, in order to retain it in position. Said hook-shaped part is preferably arranged to move upwardly, during pivotable movement of the securement means towards said operative position, in order to extend into said part of the coupling member.

In a preferred embodiment, said securement means comprises a unitary member which is pivotably mounted and includes said activation member and said hook-shaped part with the hook-shaped part suitably being spaced further from said axis than said activation member. Preferably, said securement means includes two limbs which extend from the same side of a joining member which joins the two limbs and, suitably, one of said limbs defines said activation member and the other defines said hook-shaped part.

Preferably, said securement means is biased for example by being weighted, towards its inoperative position.

Preferably, lock means is provided and arranged to secure the securement means in its operative position. Said lock means is preferably arranged to extend into aligned openings in said securement means and in a housing adjacent said securement means.

Said restrictor means is preferably elongate. It is preferably slidable into and out of said opening.

Said restrictor member of said restrictor means is preferably arranged within a bore and it cooperates with said bore for defining said travel path. One of said restrictor member or said bore preferably includes a male element which is arranged to cooperate with a guide track associated with the other one of said restrictor member or said bore. Said guide track is preferably curved and, preferably, it has a component which curves around the elongate axis. In one embodiment, said guide track is preferably arc-shaped, more preferably semi-circular, with the ends of the arc/semi-circular being spaced in the direction of the axis of the bore. In another, preferred, embodiment, said guide track includes one portion that curves towards, on one side, and another portion that curves away, on an opposite side, from a portion of said guide track that extends in the direction of the axis of the bore.

Said guide track preferably defines a first stop position for said male element. In said first stop position, said restrictor member is preferably in a fully operative position wherein it restricts movement of said securement means as described. Said guide track preferably defines a second stop position wherein said restrictor member is retracted from said fully operative position but suitably not fully retracted from an opening in said securement means. In said second stop position, said restrictor member is preferably prevented from moving towards its fully operative position by the cooperation of said male element and said guide track. An operation means is preferably provided for use by an operator to cause movement of said restrictor member between said first and second stop positions. Said operation means preferably incorporates a lever means, for example a Tommy bar. Said lever means is preferably movable relative to other parts of said operation means, suitably so that, in use, with the coupling device secured to a towing vehicle, said lever means can move from a first position wherein it is a spaced a first distance from the ground over which the towing vehicle may travel and a second position wherein it is spaced a second distance (greater than said first distance) from said ground. Preferably, said lever means is arranged to move substantially linearly, preferably by sliding, between said first and second positions. Said operation means is preferably arranged, for example by being weighted, to cause rotation of said restrictor member from its second stop position to its third stop position. Preferably, movement of said restrictor member between said first and second stop position involves rotation of said member. In one embodiment, movement of said restrictor member from said first stop position to said second stop position may involve said restrictor member being rotated in a first direction about an elongate axis of a bore in which it is arranged, followed by rotation in a second direction about said axis. In another, preferred, embodiment, movement of said restrictor member from said first stop position to said second stop position involves rotation in only one direction about said axis. Said guide track preferably defines a third stop position in which said restrictor member is fully retracted from an opening in said securement means. In said third stop position, said restrictor member is preferably prevented from moving towards its fully operative position by virtue of the opening in said securement means (into which opening said restrictor member extends when in its operative position) not being fully aligned with said restrictor member.

Said guide track may be arranged for substantially linear movement between said second and third stop positions. Movement between said second and third positions may be caused by pivotal movement of said securement means towards said inoperative position. To this end, said securement means may include an inclined, for example a chamfered, region over which said restrictor member may travel so that it is gradually moved to a position wherein it is fully retracted from a opening in said securement means. Preferably, said restrictor member includes said male element and said bore includes said guide track.

Said restrictor means is preferably biased, more preferable resiliently biased, for example by a spring means, towards said securement means. Said spring means is preferably arranged around the restrictor member, suitably between a fixed part of said member and a part of a housing relative to which said restrictor member can move.

Said coupling device may be suitable for trailers of a weight of at least 0.5 tons, preferably at least 1 ton, more preferably at least 2 tons, especially at least 3 tons.

Preferably, said securement means is arranged to substantially automatically move towards its operative position on movement of a coupling member into the jaw of the device. Preferably, said restrictor means (when provided) is arranged to substantially automatically move towards its operative position on movement of the securement means towards its operative position.

Where said device includes a restrictor means, indicator means is preferably provided for allowing an operator to distinguish between two different positions of said restrictor means, for example an operative and inoperative position of said restrictor means. Said indicator means is preferably a visual indicator which is arranged to move between first and second positions to distinguish between said two positions. Said indicator means is preferably pivotable between its first and second positions. Said indicator means may comprise an indicator part which is arranged to seat upon a movable part of said restrictor means when said restrictor means is in an inoperative position in which case said indicator means is in its first position; and wherein the seat is moved away so that said indicator part is disengaged therefrom and moves towards its second position as said restrictor means moves towards said operative position.

Where said device includes a restrictor means, a movable cover means is preferably provided for covering a part of said restrictor means, suitably a movable part thereof. Preferably, said cover means is arranged to cover a part of a housing of said restrictor means.

Preferably, said cover means is an integral part of said restrictor means.

According to a further aspect, in a method of operating a coupling member of a towable vehicle and a coupling device to which said coupling member may be secured, the method comprises causing the coupling member to move relative to the coupling device to cause thereby a securement means of the coupling device to pivot between an inoperative position and an operative position in which the coupling member is secured to the coupling device, causing restrictor means to restrict movement of said securement means away from said operating position by a restrictor member of said restrictor means extending into an opening, for example in said securement means, is characterised in that said method comprises guiding movement of the restrictor member is guided along a travel path to cause rotation of the restrictor member, in a first direction about an axis and movement of the restrictor member in the direction of extent of the axis.

The method may comprise causing the coupling member to contact an activation means which causes said securement means to move towards it operative position. Preferably, in the method, a hook-shaped part of said securement device engages an opening in said coupling member during movement towards said operative position.

Preferably, in the method, a restrictor means automatically takes up a position in which it restricts (preferably prevents) pivotal movement of the securement means, suitably as said securement means reaches its operative position. Preferably, said restrictor means is urged by a spring force into such a position.

The method may include releasing the coupling member from the coupling device by causing a restrictor member of a restrictor means to be withdrawn from a position of engagement with said securement means. The method may include an operator rotating the restrictor member in a first direction, suitably whilst the restrictor member moves away from the securement means. In one embodiment, the method may involve an operator also causing the restrictor means to rotate in an opposite direction to said first direction. In a preferred embodiment, the only rotational movement required to release the coupling member is rotation in said first direction (and not said second direction).

The invention extends to the use of a coupling device according to the first aspect for securing a towable vehicle to a towing vehicle.

Any feature of any aspect of any invention or embodiment described herein may be combined with any feature of any aspect of any other invention or embodiment described herein.

Specific embodiments of the invention will now be described, by way of example, with reference to the accompanying diagrammatic drawings, in which:
Figure 1 is a side view from a first side of a coupling device in a locked position engaged with an eye-shaft (which is shown partly in cross-section);
Figure 2 is a side view from a second side of the coupling device in the locked position engaged with an eye-shaft (which is shown partly in cross-section);
Figure 3 is a side view from the first side of the coupling device of figure 1 in an unlocked position with the eye-shaft arranged in a position just prior to causing the coupling device to move towards a locked position;
Figure 4 is a side view from the second side corresponding to the arrangement of figure 3;
Figure 5 is a front view (in the direction of arrow V of figure 1) partly in cross-section of the coupling device in a locked position, with the eye-shaft omitted in the interests of clarity;
Figure 6 is a front view (in the direction of arrow VI of figure 3) partly in a cross-section of the coupling device in an unlocked position, with the eye-shaft omitted in the interests of clarity;
Figure 7 is a detailed cross-sectional side view of a plunger arrangement of the coupling device during movement towards an unlocked position;
Figure 8 is a view in the direction of arrow VIII of figure 7, with a groove of the arrangement schematically represented;
Figure 9 is a detailed cross-sectional side view of the plunger arrangement when in the locked position of figure 1;
Figure 10 is a view in the direction of arrow X of figure 9, with a groove of the arrangement schematically represented;
Figure 11 is a side view of an alternative coupling device comprising a swivelling jaw;
Figure 12 is a front view of the device of figure 11 including a representation of two different positions it may assume on swivelling;
Figure 13 is a side view of another alternative swivelling jaw coupling device;
Figure 14 is a front view of the device of figure 13.
Figures 15 to 24 are views of a second embodiment of a coupling device which correspond to the views of respective Figures 1 to 10; and
Figure 25 is a view of the coupling device of the second embodiment from the rear, with a ball coupling component omitted from the drawing; and
Figure 26(a) is a front view of a spring clip; figure 26(b) is a view of the clip in the direction of arrow b; and Figure 26(c) is a view of the clip in the direction of arrow c.

In the figures, the same or similar parts, are annotated with the same reference numerals.

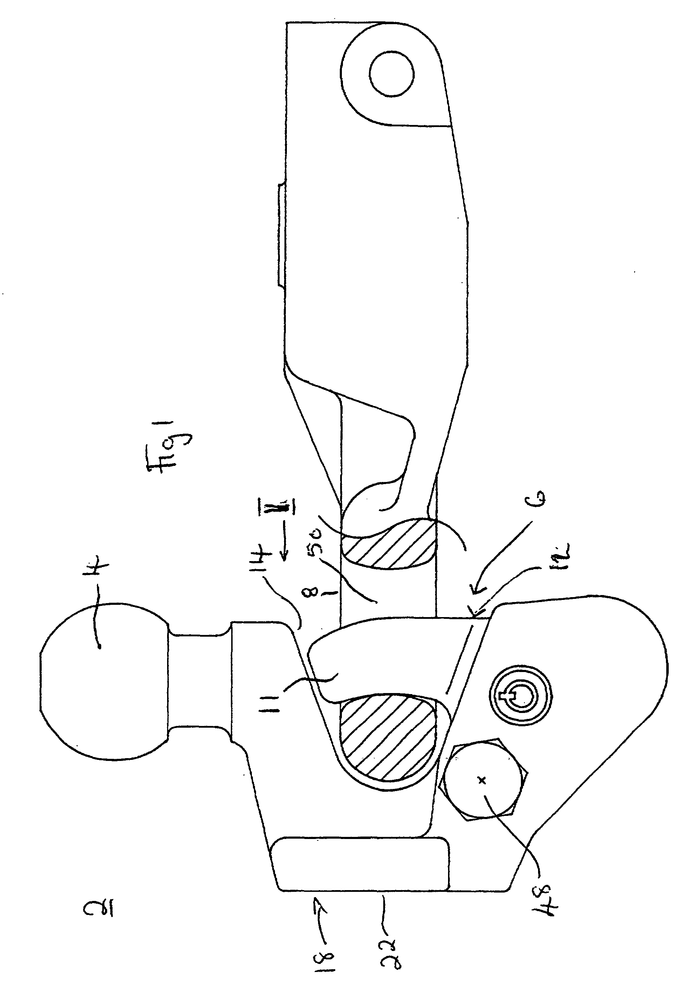

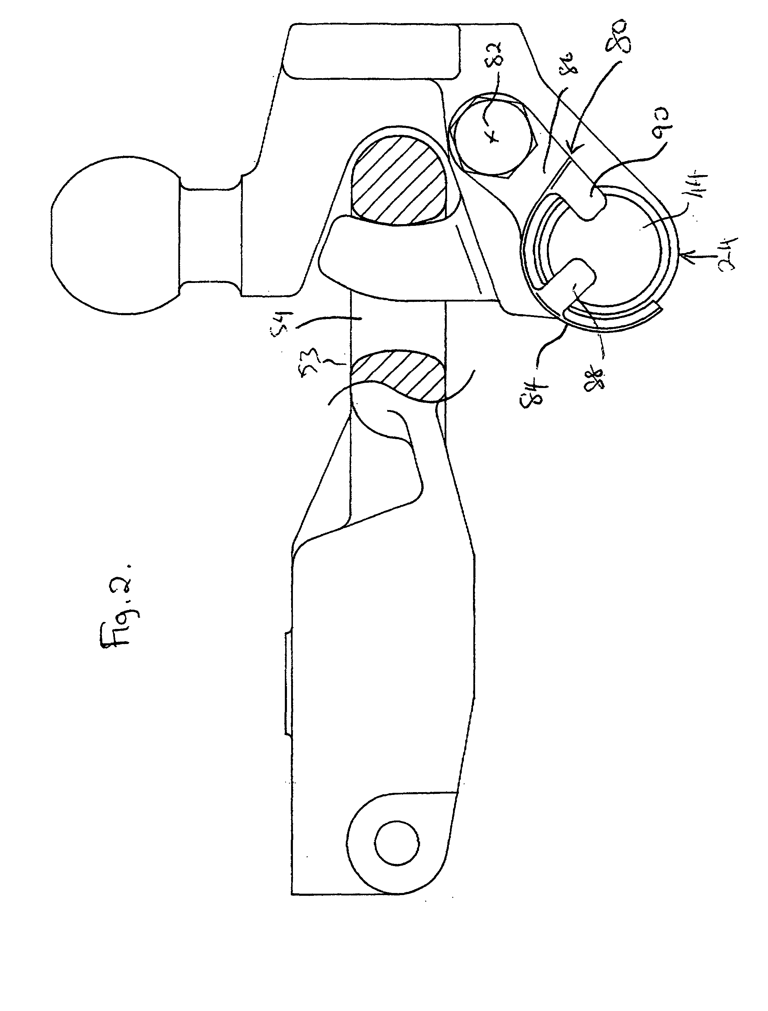

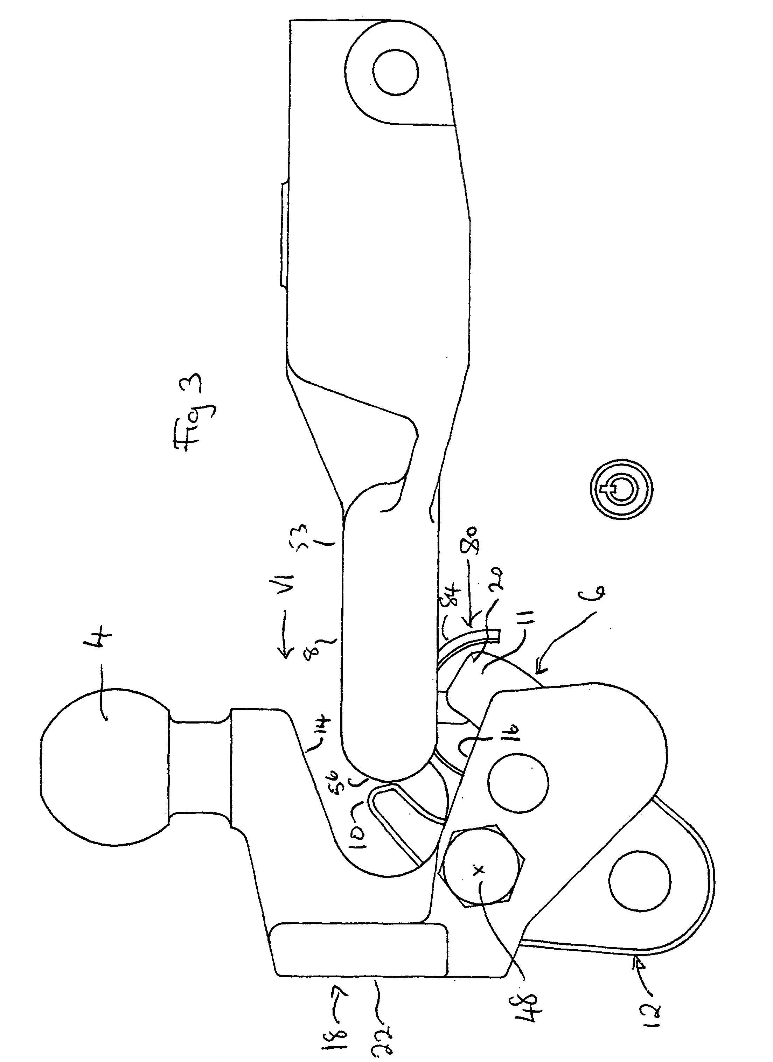

Referring to figures 1 and 3, the coupling device 2 incorporates a ball coupling component 4 of a conventional type and a jaw coupling component 6 which is arranged to be semi-automatic in operation in that, as a conventional eye-shaft 8 contacts a horn 10 of a pivotable securement member 12 and is urged further into a jaw defined between inclined faced 14, 16 of a body 18, the securement member 12 pivots in an anti-clockwise direction (as seen in figures 1 and 3) where it automatically snaps into the locked position shown in figure 1 (and figure 2) in which a hooked-end 11 of member 12 engages and retains the eye-shaft in position.

The device 2 is described in greater detail below.

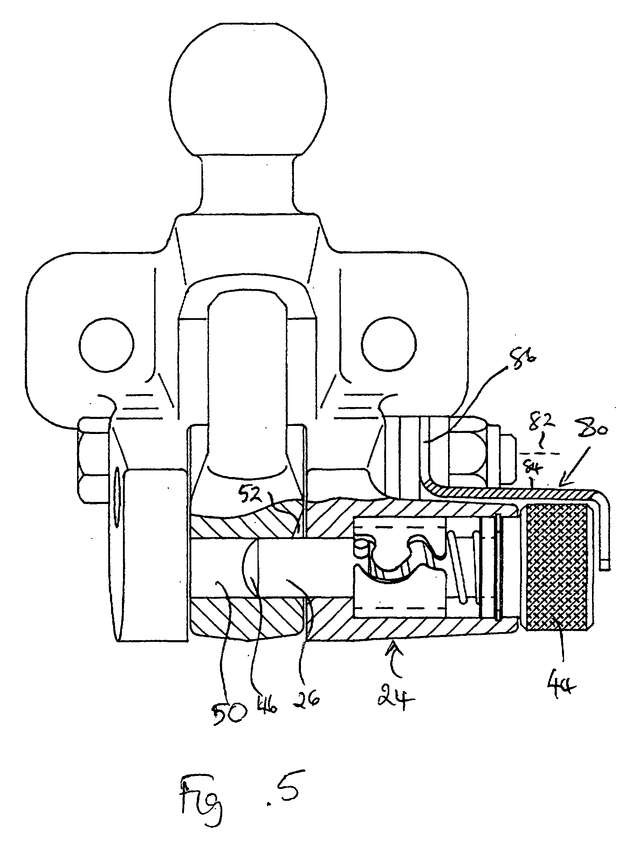

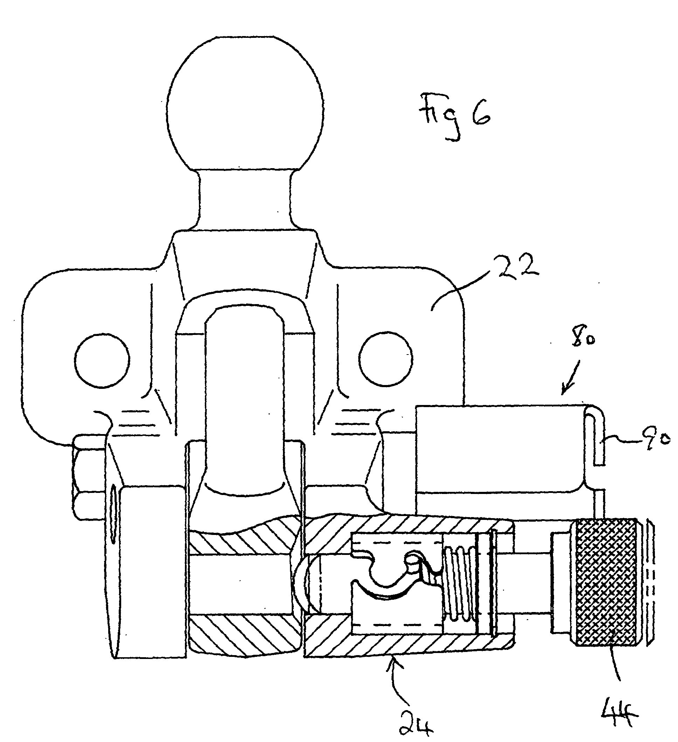

The body 18 suitably comprise a metal forging which incorporates the ball 4 and is arranged to be secured to the rear of a towing vehicle (not shown) by means of an integral back plate 22. The body defines the jaw into which the eye-shaft fits and a housing 24 in which a plunger 26 (figures 5 to 9) is movable.

The housing 24 includes a circularly cylindrical sleeve 28 in which the plunger 26 is arranged. A pin 30 extends transversely through the plunger 26 and engages a guide way 32 defined in an upper region of the inwardly facing wall of the sleeve 28. The guideway 32 includes a first open end 34 at one end of the sleeve 28 which is arranged to allow the plunger 26/pin 30 to be inserted into the sleeve 28. Downstream of end 34, the guideway curves inwardly and across the inwardly facing cylindrical wall of the sleeve until it defines an intermediate position 36. Downstream of the intermediate position 36, the guideway traverses a generally semi-circular path 38 across the inwardly facing wall of the sleeve until it reaches an inner open end 40.

The plunger 26 carries a compression spring 41 arranged between the pin 30 and an end plate 42 which is immovably fixed relative to housing 24 so that the plunger 26 is biased inwardly towards member 12. At its outer end, the plunger 26 has a user-operable knurled knob 44. The plunger has a part-spherical inner end 46.

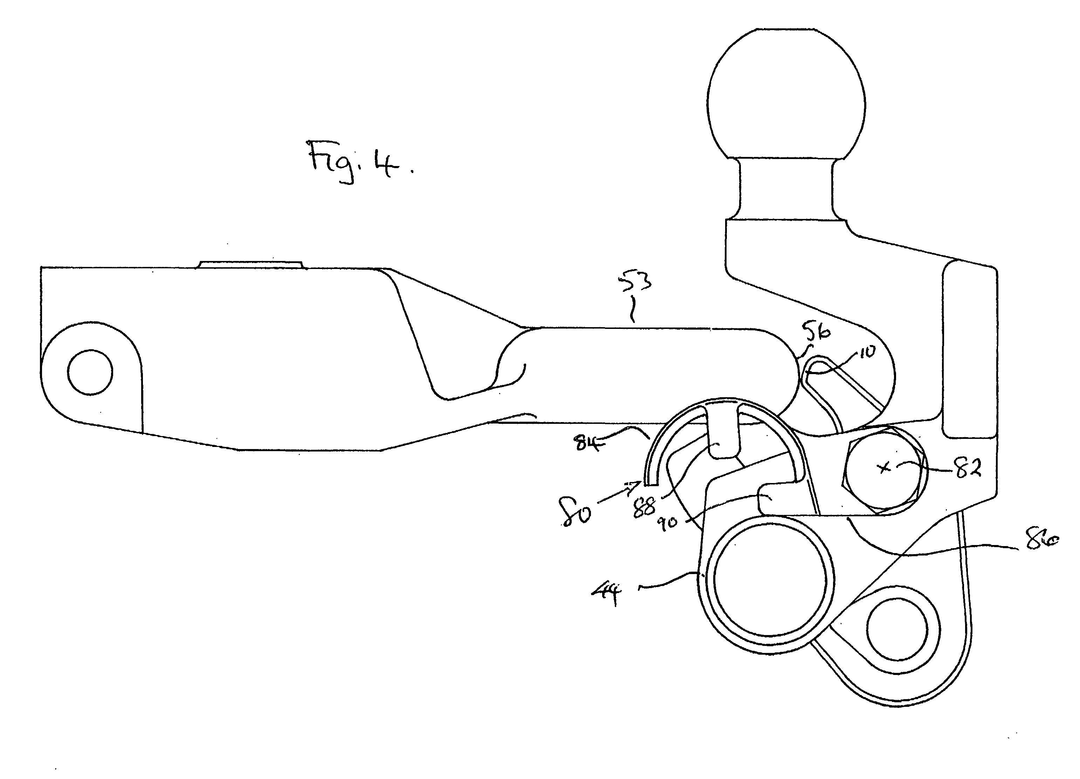

The securement member 12 is pivotably mounted about a pivot axis 48 and has its centre of gravity such that, when unrestrained, it pivots about the axis to a rest position as shown in figures 3 and 4.

The member 12 includes a bore 50 which is axially aligned with, and arranged to slidably receive, the plunger 26 when it is arranged in an operative position as shown in figures 1, 2 and 5. Laterally above the bore 50 and adjacent its open end, there is a narrow chamfered region 52.

A cover device 80 is pivotably mounted about a pivot axis 82. The device 80 includes a semi-cylindrical part 84 which is arranged to fit snugly around an upper part of the housing 24 and the knob 44 when the plunger 26 is in its operative position, as shown in figures 2 and 5. The part 84 is supported on an arm 86 which is pivotably mounted. First and second tabs 88, 90 extend radially inwardly from semi-cylindrical part 84 at an outer end thereof. The cover device 80 is movable between a first position in which tab 90 is seated on the outer cylindrical surface of knob 44 (and part 84 is not positioned around the housing 24) as shown in figures 3, 4, 6 and 8, and a second position in which part 84 surrounds the housing 24/knob 44, as shown in figures 2, 5 and 10. The device 80 is weighted towards the second position.

The eye-shaft 8 is of conventional design and comprises a body 53 defining a circular opening 54.

With the device 2 secured to the rear of a towing vehicle and the eye-shaft 8 secured to a towable vehicle, the device 2 may operate as follows to secure the eye-shaft to the device 2.

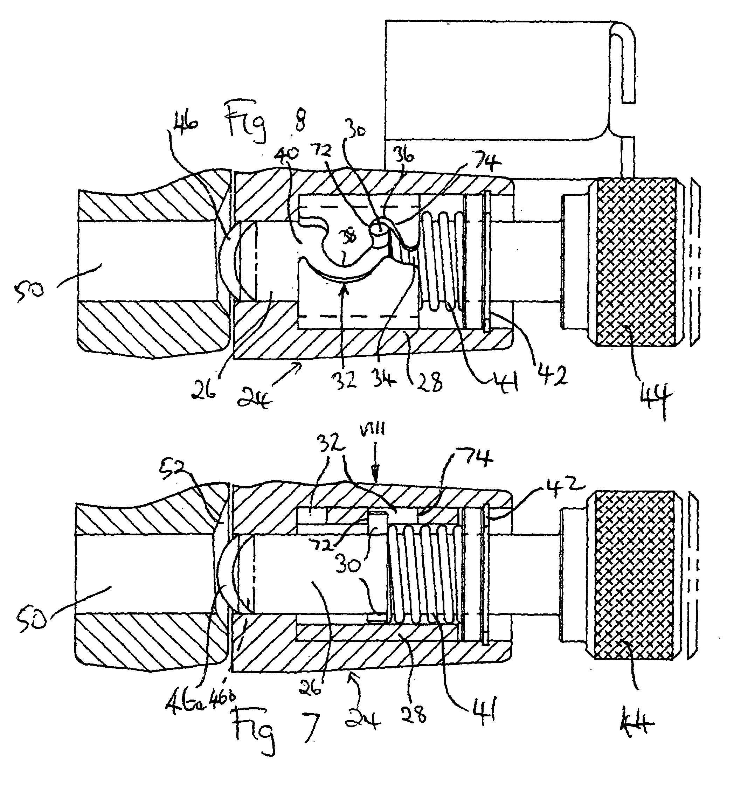

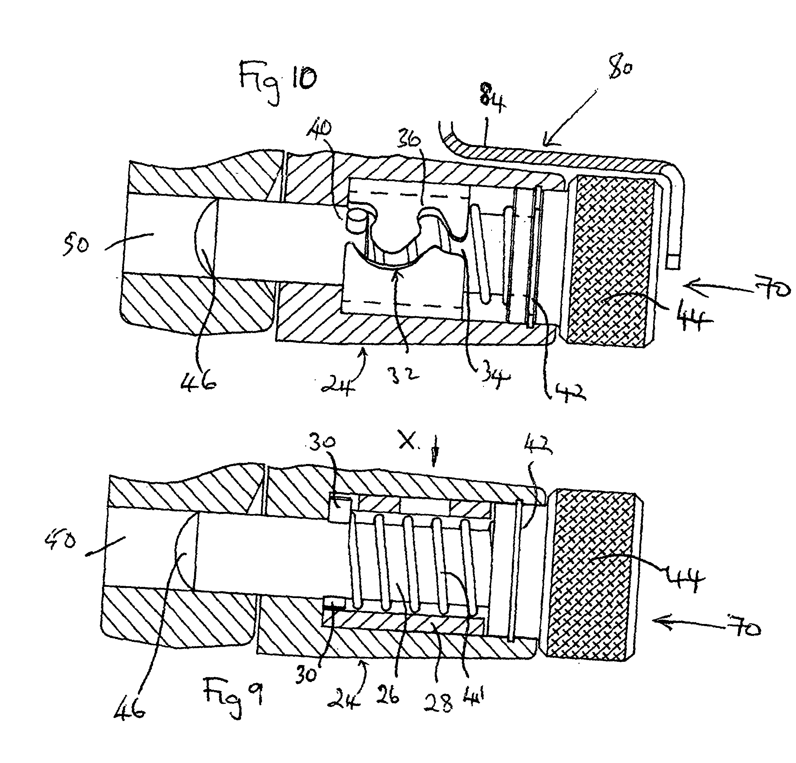

Referring to figures 3 and 4, it will be noted that the cover device 80 is initially in its first position wherein tab 90 abuts knob 44. When so disposed, the towing vehicle is reversed towards the eye-shaft (or the towable vehicle may be moved towards the device 2) so that a forward end 56 of the body 53 contacts horn 10 of the securement member 12. Further relative movement of the device 2 and eye-shaft 8 towards one another causes the securement member 12 to pivot in an anti-clockwise direction (as seen in figure 3) about pivot axis 48 so that its hook end 20 gradually enters the opening 54 in the eye-shaft. When the chamfered region 52 of member 12 is opposite end 46 of the plunger, the spring 30 urges the plunger 26 into the chamfered region and as member 12 pivots further so that bore 50 in member 12 is opposite plunger 26, the plunger is urged into the bore whereby movement of member 12 is arrested and the hook 20 is so positioned within opening 54 of the eye-shaft that the eye-shaft is securely retained in position. When so disposed, the pin 30 is arranged towards inner end 40 of guideway 32 as shown in figures 9 and 10. When the plunger is at the extreme of its movement into the bore 50, the knob 44 has moved leftwardly (as seen in figures 7 to 10) sufficiently that tabs 88, 90 clear the end of knob 44 so that the cover device moves under its own weight to its second position. When the device 2 is arranged in the locked position of figures 1, 2, 9 and 10, the eye-shaft cannot be inadvertently released by an operator and/or released due to vibrations or other forces caused as the towable vehicle/towing vehicle travel, due to the spring force exerted by spring 40 and the release mechanism for the plunger 26 which is described hereinafter. Furthermore, the cover device 80 further restricts inadvertent release, acts as an indicator that the coupling device 2 is in its locked position and protects the plunger 26 from spillage and other possible damage.

It should be appreciated that, in contrast to existing coupling device/eye-shaft arrangements, no potentially difficult and dangerous manual insertion of a pin is required. Furthermore, unauthorised release of the eye-shaft may be prevented by inserting a barrel lock 60 into a bore 62 in housing 18 and a suitably shaped bore 64 in member 12 which is aligned with bore 62 when the coupling is in the locked position of figure 1.

The eye-shaft may be released from device 2, as follows:

Firstly, referring to figures 9 and 10, an operator lifts cover device 80 and moves it to its first position and then grasps knob 44 and rotates it in the anti-clockwise direction when viewed in the direction of arrow 70. This causes plunger 26 to rotate and be retracted from bore 50 as the pin 30 fixed thereto moves along guideway 32 towards intermediate position 36. As pin 30 approaches the intermediate position, the operator must change the direction of rotation so that the pin 30 becomes seated in the intermediate position as shown in figures 7 and 8. At this stage pin 30 abuts inner wall 72 of the guideway at the intermediate position and the end of the plunger is in position 46a wherein it is still slightly within bore 50.

Then, the towing vehicle can be moved away from the towable vehicle in which case securement member 12 is caused to pivot from the position shown in figure 1, to the position shown in figure 3. As this happens, the end 46 of the plunger enters chamfered region 52 which has the effect of urging the plunger rightwardly (as seen in figures 1 and 3), so that pin 30 moves towards the outer wall 74 of the guideway, at which position its end is in position 46b wherein it is fully retracted from the bore 50. The cover device 80 can then again rest upon knob 44. The securement member 12 can then be moved to its fully open position prior to re-engagement of an eye-shaft in the manner previously described.

As an alternative to use of the jaw coupling component 6, the ball coupling component 4 may be used in a conventional manner.

The coupling device 2 may be designed for any application. Suitably, it may be used for trailers of up to 3.5 tons and with eye-shafts of 30, 40 or 50mm internal diameters.

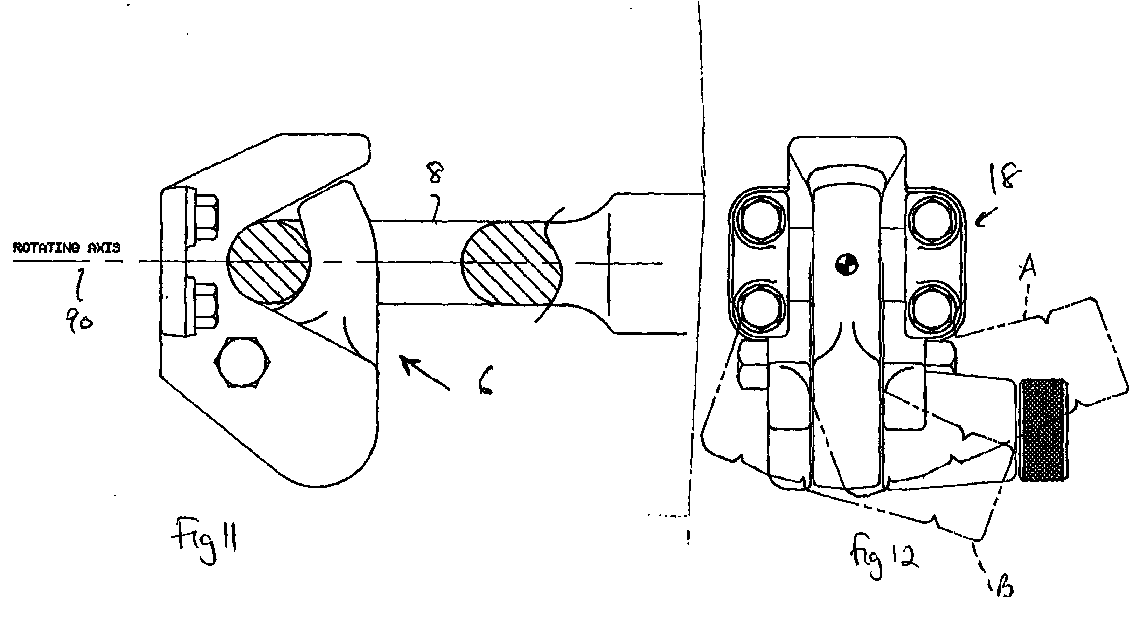

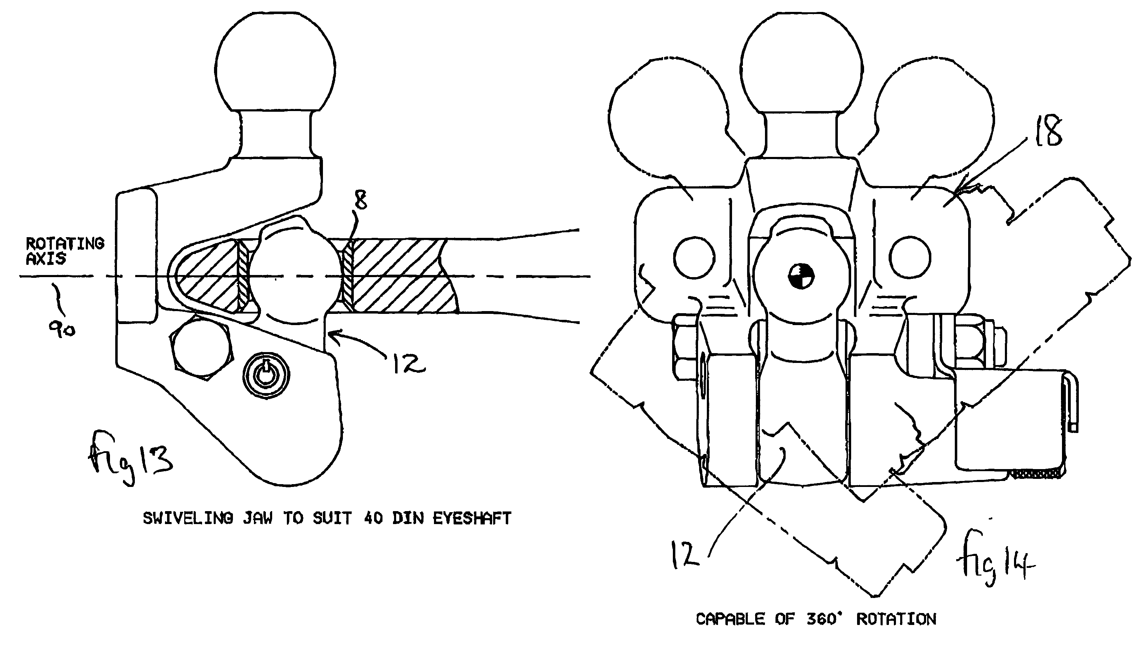

The coupling device of figures 11 and 12 may be adapted to be rotatable about axis 90 through 360° so that it can assume, for example, positions A and B in use. Suitably, the mounting arrangement satisfies standard BSAU 24 and is suitable for 76NATO eye-shafts (to DEF STAN 25-06/3).

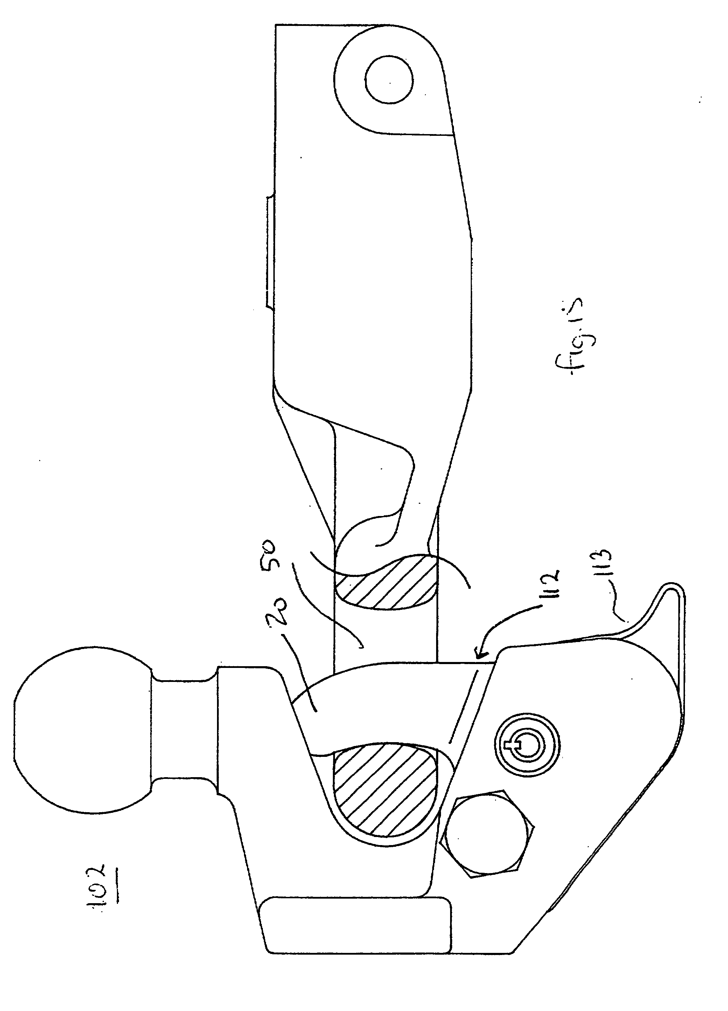

The coupling device of figures 13 and 14 includes a bulbous member 12 and it may also be rotatable as for the figures 11 and 12 embodiment. The mounting may satisfy standard BSAU 219 and be suitable for 40mm DIN eye-shafts (to DIN standard 74054).

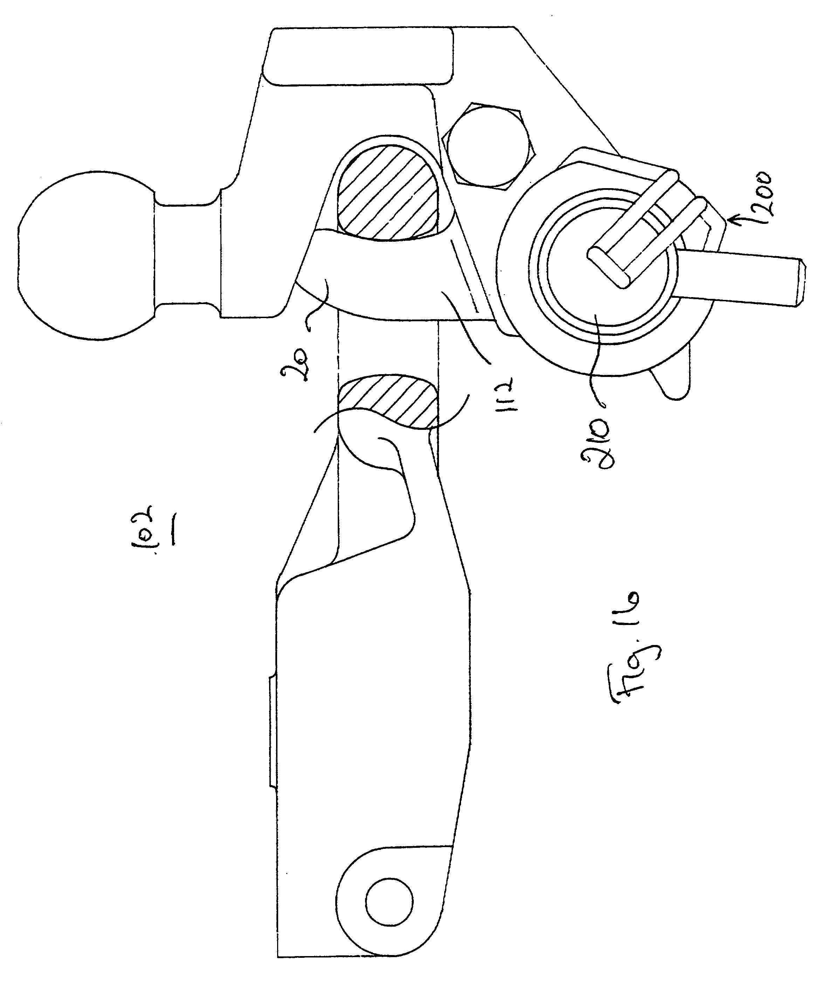

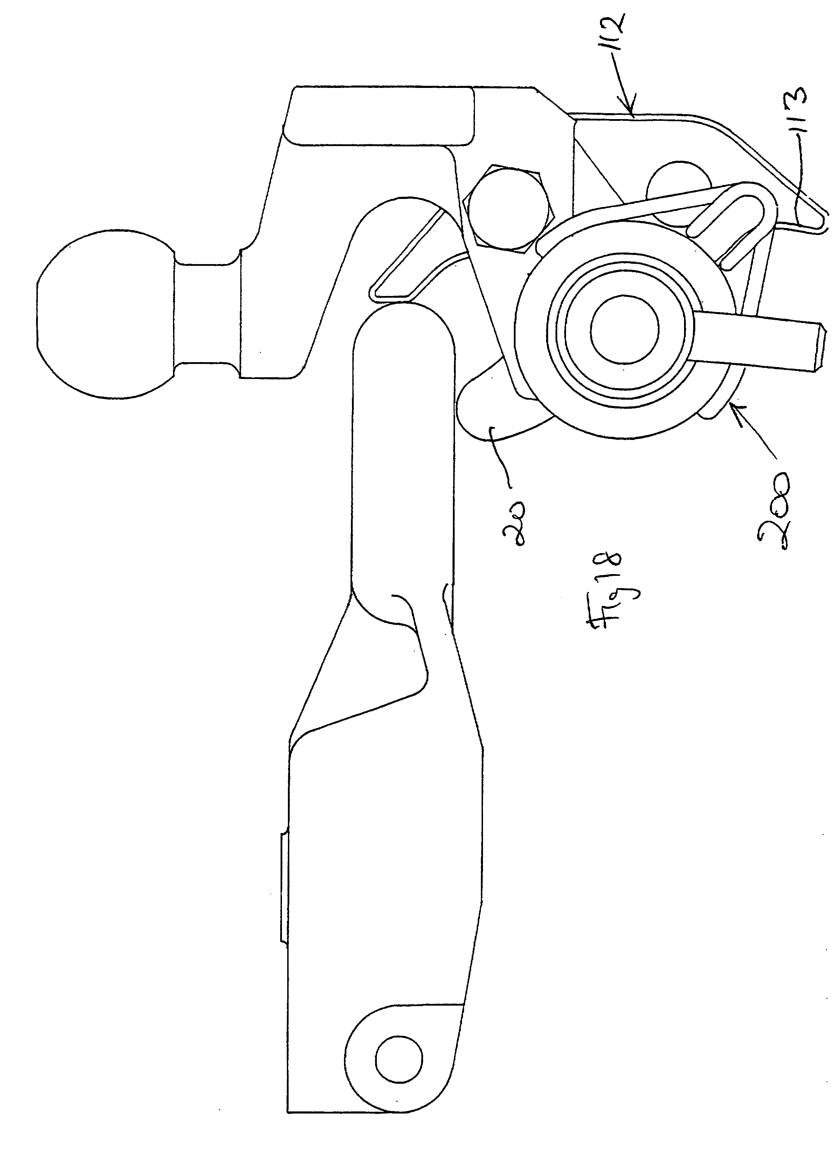

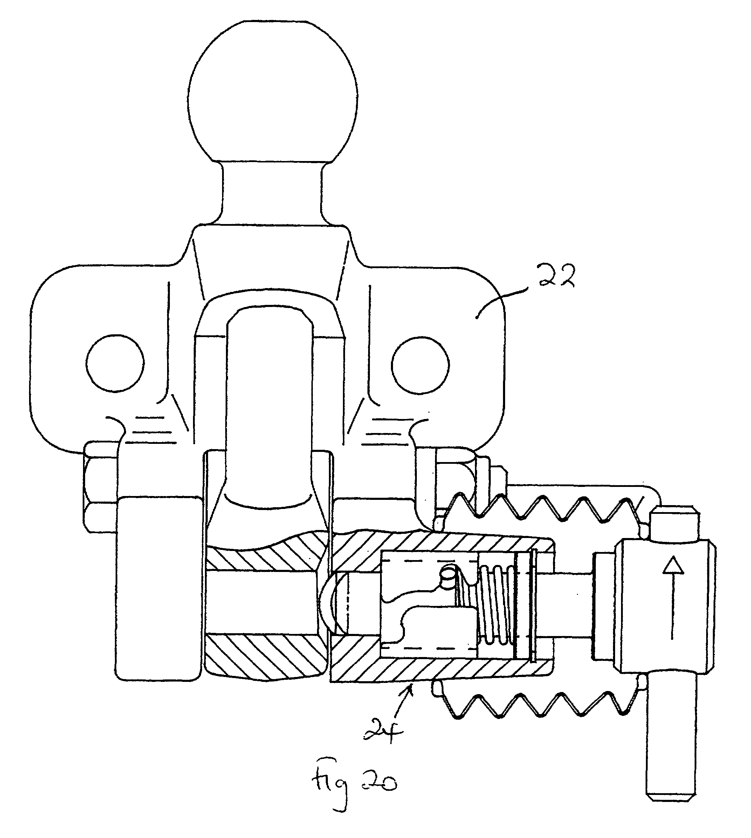

The coupling device 102 of Figures 15 to 26 is generally similar to the device of Figures 1 to 10 in its construction and operation and, accordingly, only the differences are described hereinafter.

Pivotable securement member 112 of device 102 is similar to securement member 12 of device 2, except that member 112 includes a concave abutment foot 113 which is arranged to be contacted by a foot of an operator to urge the member 112 from the Figure 15 to the Figure 17 positions.

Housing 24 of device 102 is similar to that of device 2; however, the main difference is in the shape of the guideway 132 which engages point 30. Guideway 132 (see figures 21 to 24) includes a first open end 134. Downstream thereof, the guideway curves towards an intermediate position 136 which is substantially the same as intermediate position 136 of device 2. Downstream of the intermediate position 136, the guideway follows a path 138 which curves one way and then an opposite way (the path is generally a mirror image of an "S"-shape) across the inwardly facing wall of the sleeve until it reaches an inner open end 140 which includes a seat 141 for the pin 30.

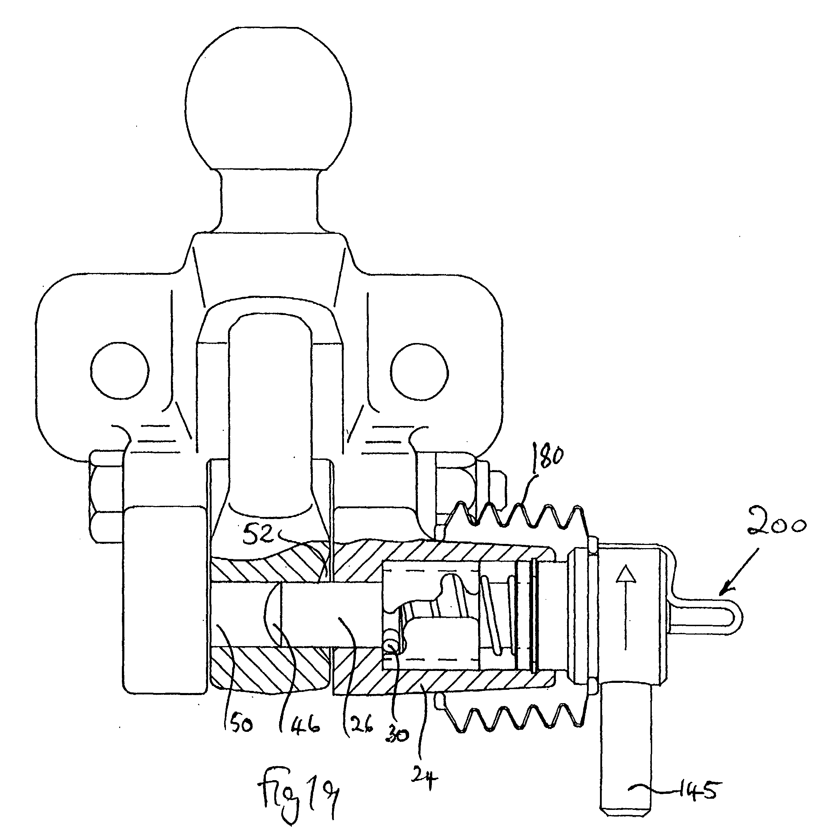

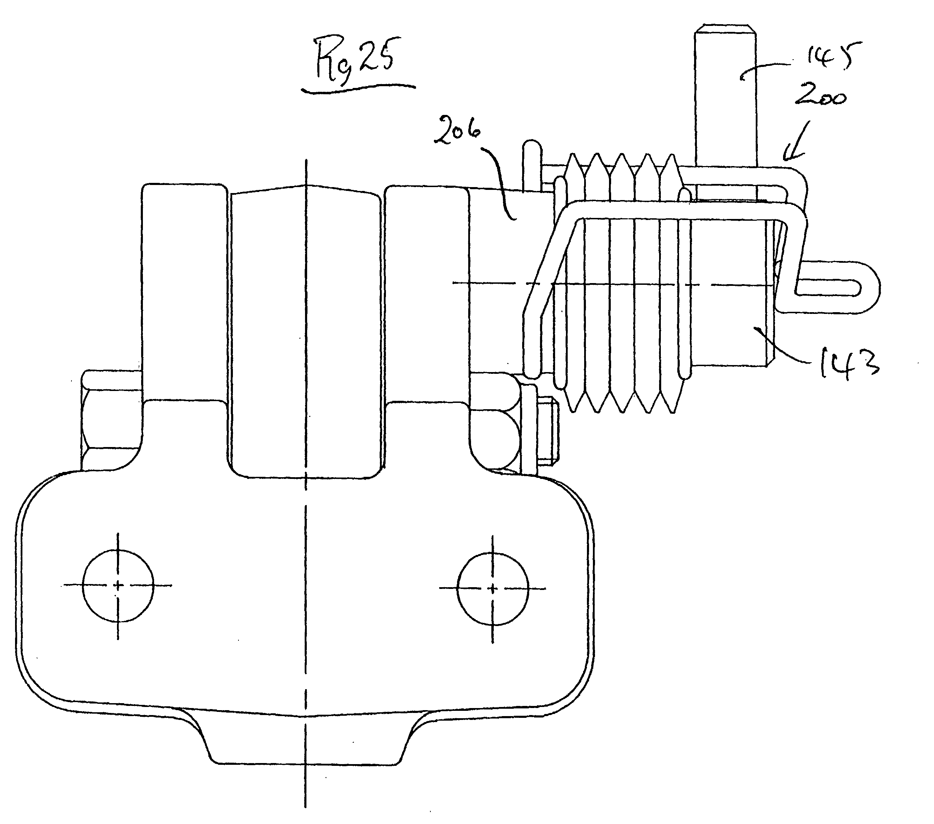

Instead of the knurled knob 44, the plunger 25 has a knob 143 which supports a Tommy bar 144 which is slidable within a diametrically-extending cylindrical sleeve defined in the knob, so that it can pass from one side to an opposite side of the knob. The knob 143 is arranged so that, when the pin 30 is seated within seat 141, as shown in Figures 19 and 24, the Tommy bar extends upwardly. As a result, the weight of the Tommy bar tends to urge the pin 30 into engagement with seat 141.

Instead of the cover device 80, a bellows arrangement 180 (see Figure 19) is fixed between the knob 143 and housing 24, to prevent egress of dirt (and the like) into guideway 132.

The device 102 functions generally as described above with reference to Figures 3 and 4 to secure the hook 20 within opening 50 of the eye-shaft. When the plunger is at the extreme of its movement, the pin 30 is seated within seat 141 as shown in Figures 19, 23 and 24. In the event that end 145 of Tommy bar 144 abuts the ground during towing (as it might do if the towing vehicle passes over a speed ramp) the Tommy bar can slide upwardly within the knob.

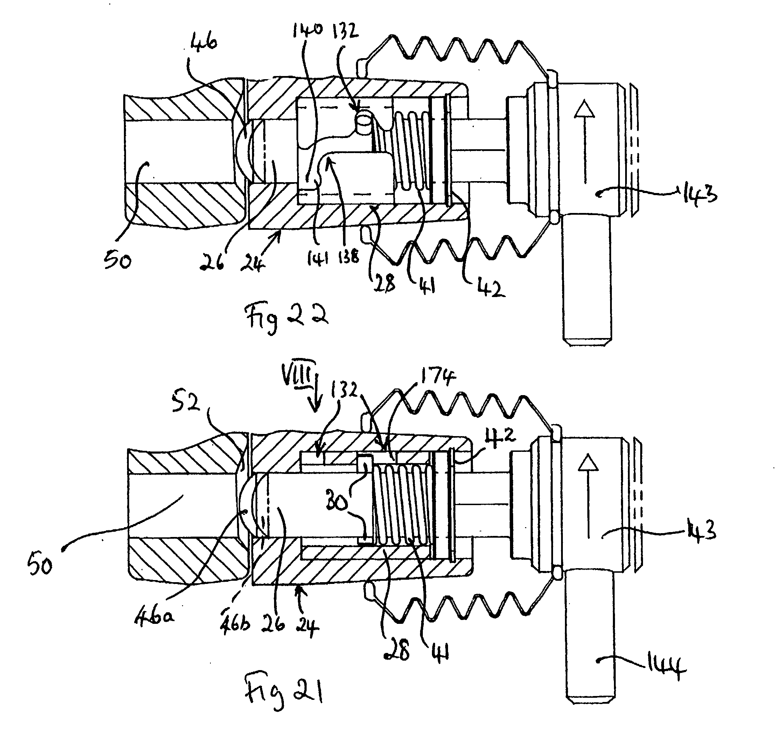

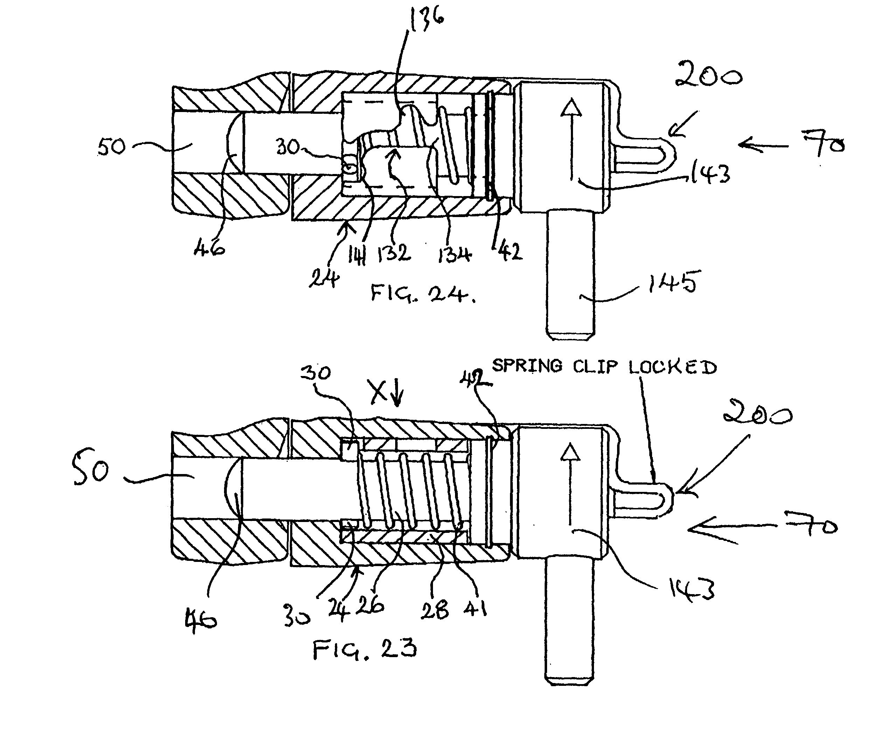

To withdraw the plunger 26, an operator uses the Tommy bar 144 to rotate knob 143 in a clockwise direction when viewed in the direction of arrow 70 in Figures 23 and 24. This causes plunger 26 to rotate and be retracted from bore 50 as pin 30 moves along guideway 132 to intermediate position 136 where it is seated as shown in Figures 21 and 22. The towing vehicle can then be moved away from the towable vehicle to cause the pin 30 to move towards outer wall 174 of the guideway 132, at which position the end of the plunger is in position 46b.

It should be appreciated that, in contract to the operation of device 2, priming of device 102 involves movement of the knob 143 in only one rotational direction.

The device 102 also includes a secondary locking arrangement for restricting movement of the plunger from its operative position, except under the control of an operator.

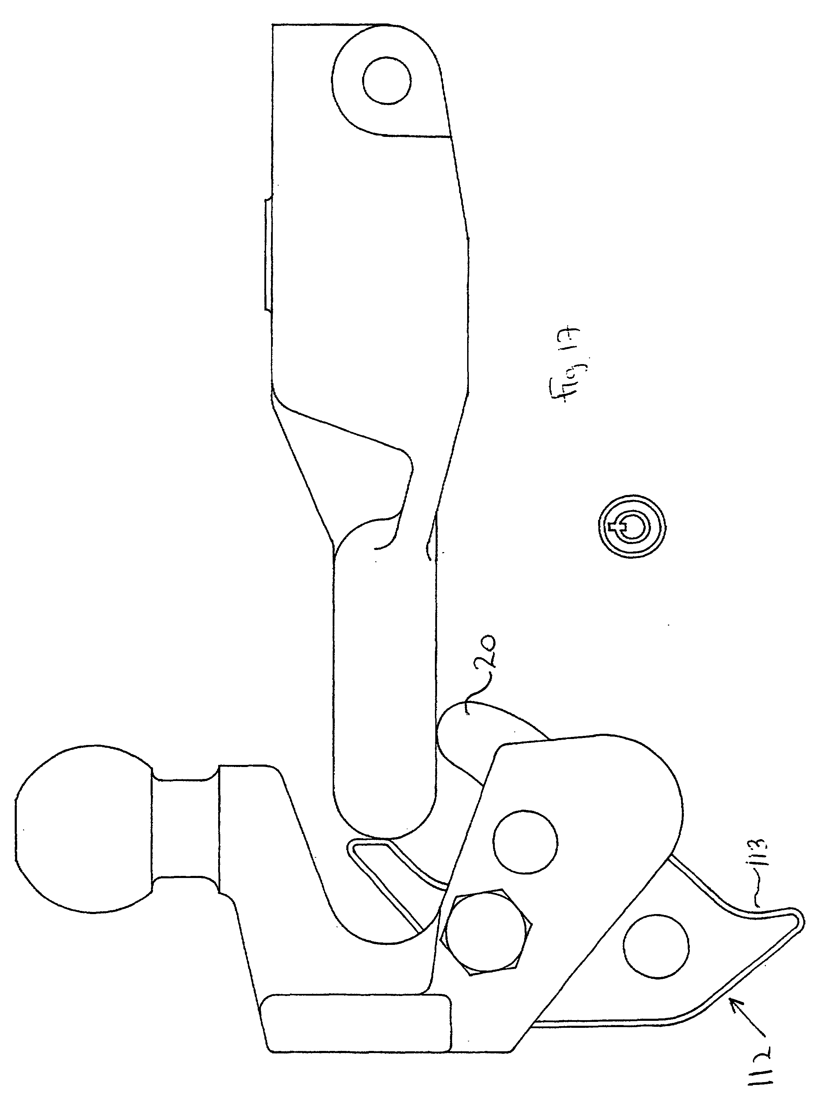

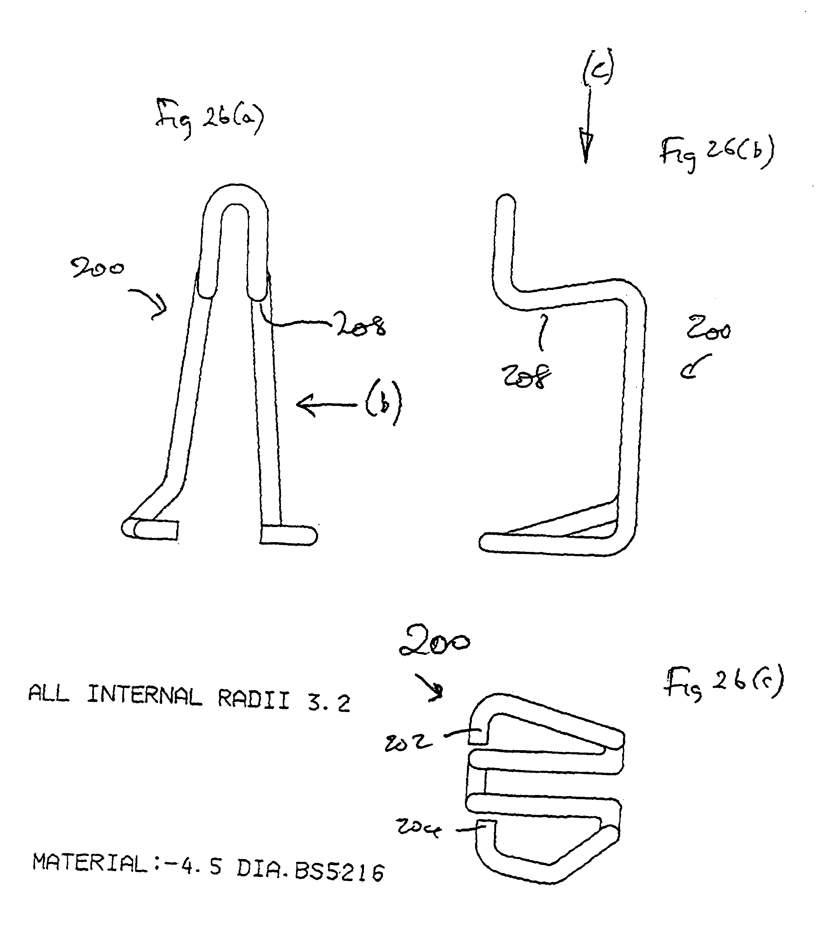

The secondary locking arrangement includes a spring clip 200 which is shown in figures 16, 18, 19, 23, 24, 25 and 26 but has been omitted from the other figures. The clip is made out of spring wire and includes respective free ends 202, 204 which are pivotably mounted within openings (not shown) in the plunger body 206 (see figure 25). The clip 200 is arranged for movement from a first position shown in figure 16 wherein an abutment part 208 thereof is seated in a shallow recess (not shown) in end 210 of the knob 143; to a second position shown in figure 18 wherein the clip does not cover the end of the knob. The clip restricts outwards movement of the knob when in the first position but not the second position. In use, once an eye-shaft of a towable vehicle has been engaged with the jaw coupling component 6 of device 102, the operator can pivot the clip to the first position. When it is desired to disengage the eye-shaft, the clip may simply be pivoted to the second position and the knob 143 rotated to retract the plunger and disengage the eye-shaft.

## Claims

1. A coupling device (2) comprising a jaw (6) for receiving a coupling member (8) attached to a towable vehicle and a securement means (12) for retaining the coupling member (8) in a position of securement to the coupling device (2), wherein said securement means (12) is pivotable between an operative position in which it may be retain the coupling member (8) in position and an inoperative position, the device including restrictor means for restricting movement of said securement means away from said operative position, said restrictor means comprising a restrictor member (26) arranged to extend into an opening (50), for example in said securement means, **characterised in that** guide means (32) is provided for defining a travel path for said restrictor means (26), wherein said travel path includes rotation of said restrictor means (26) in a first direction and movement of said restrictor means in the direction of extent of the axis about which the rotational movement takes place.

2. A device according to claim 1, which includes an activation means for activating movement of said securement means (12) from said inoperative position to said operative position, wherein said activation means is pivotably mounted for movement between its operative and inoperative positions and the pivot axes of said activation means and said securement means are coaxial.

3. A device according to claim 1 or claim 2, wherein said securement means (12) is biased towards its inoperative position.

4. A device according to any preceding claim, wherein said restrictor member (26) of said restrictor means is arranged within a bore and it co-operates with said bore for defining said travel path (32), wherein one of said restrictor member or said bore includes a male element (30) which is arranged to co-operate with a guide track (32) associated with the other one of said restrictor member or said bore.

5. A device according to claim 4, wherein said guide track defines a first stop position (40) wherein said restrictor member is in a fully operative position in which it restricts movement of said securement means and a second stop position (72) in which said restrictor member is retracted from said fully operative position and is prevented from movement back to said first stop position unless it is rotated, by operation means, for example a lever means, being provided for use by an operator to cause movement of said restrictor member between said first and second stop positions.

6. A device according to claim 4 or claim 5, wherein said guide path (32) defines a third stop position in which said restrictor member is fully retracted from an opening in said securement means.

7. A device according to any preceding claims, wherein said securement means is arranged to substantially automatically move towards its operative position on movement of a coupling member into the jaw of the device and said restrictor means is arranged to substantially automatically move towards its operative position on movement of the securement means towards its operative position.

8. A method of operating a coupling member (8) of a towable vehicle and a coupling device (2) to which said coupling member may be secured, the method comprising causing the coupling member (8) to move relative to the coupling device (2) to cause thereby a securement means (12) of the coupling device to pivot between an inoperative position and an operative position in which the coupling member is secured to the coupling device, causing restrictor means to restrict movement of said securement means away from said operative position by a restrictor member (26) of said restrictor means extending into an opening (50), for example in said securement means, **characterised in that** said method comprises guiding (32) movement of the restrictor member (26) is guided along a travel path (32) to cause rotation of the restrictor member (26), in a first direction about an axis and movement of the restrictor member in the direction of extent of the axis.

9. A method according to claim 8, which includes releasing the coupling member from the coupling device by causing the restrictor member (26) to be withdrawn from a position of engagement with said securement means, wherein said coupling member is released in a method which includes the step of an operator rotating the restrictor member (26) in a first direction whilst said restrictor member moves about the axis of rotation away from said securement means.

## Patentansprüche

1. Kupplungsvorrichtung (2) mit einer Klaue (6) zum Aufnehmen eines Kupplungselements (8), das an ein abschleppbares Fahrzeug angebracht ist, und einer Sicherungseinrichtung (12) zum Zurückhalten des Kupplungselements (8) in einer Sicherungsstellung an der Kupplungsvorrichtung (2), wobei die Sicherungseinrichtung (12) drehbar zwischen einer wirksamen Stellung, in der das Kupplungselement (8) in Stellung zurückhaltbar ist, und einer unwirksame Stellung ist, wobei die Vorrichtung eine Beschränkungseinrichtung zum Beschränken von Bewegung der Sicherungseinrichtung weg von der wirksamen Stellung beinhaltet, wobei die Beschränkungseinrichtung ein Beschränkungselement (26) hat, das angeordnet ist, um sich in eine Öffnung (50), zum Beispiel in die Sicherungseinrichtung, zu erstrecken,
**dadurch gekennzeichnet, dass**
eine Führungseinrichtung (32) zum Definieren eines Bewegungswegs für die Beschränkungseinrichtung (26) vorgesehen ist, wobei der Bewegungsweg Drehung der Beschränkungseinrichtung (26) in eine erste Richtung und Bewegung der Beschränkungseinrichtung in die Richtung der Ausdehnung der Achse beinhaltet, um die die Drehbewegung stattfindet.

2. Vorrichtung nach Anspruch 1, die eine Aktivierungseinrichtung zum Aktivieren von Bewegung der Sicherungseinrichtung (12) von der unwirksamen Position zu der wirksamen Position beinhaltet, wobei die Aktivierungseinrichtung zur Bewegung zwischen ihrer wirksamen und unwirksamen Position montiert ist und die Drehachsen der Aktivierungseinrichtung und der Sicherungseinrichtung koaxial sind.

3. Vorrichtung nach Anspruch 1 oder Anspruch 2, wobei die Sicherungseinrichtung (12) zu ihrer unwirksamen Stellung hin vorgespannt ist.

4. Vorrichtung nach einem der vorhergehenden Ansprüche, wobei das Beschränkungselement (26) der Beschränkungseinrichtung innerhalb einer Bohrung angeordnet ist und es mit der Bohrung zum Definieren des Bewegungswegs (33) zusammenwirkt, wobei entweder das Beschränkungselement oder die Bohrung ein Vorsprungselement (30) beinhaltet, das angeordnet ist, um mit einer Führungsbahn (32) zusammenzuwirken, die mit dem anderen von entweder dem Beschränkungselement oder der Bohrung zusammenhängt.

5. Vorrichtung nach Anspruch 4, wobei die Führungsbahn eine erste Stoppstellung (40), wobei das Beschränkungselement in einer vollständig wirksamen Stellung ist, in der es Bewegung der Sicherungseinrichtung beschränkt, und eine zweite Stoppstellung (72) definiert, in der das Beschränkungselement von der vollständig wirksamen Stellung zurückgezogen wird und verhindert wird, dass es sich zu der ersten Stoppstellung, außer es wird gedreht, durch eine Betätigungseinrichtung zurück bewegt, zum Beispiel einer Hebeleinrichtung, die zur Verwendung durch einen Bediener vorgesehen ist, um Bewegung des Beschränkungselements zwischen der ersten und zweiten Stoppstellung zu bewirken.

6. Vorrichtung nach Anspruch 4 oder Anspruch 5, wobei der Führungsweg (32) eine dritte Stoppstellung definiert, in der das Beschränkungselement voll von einer Öffnung in der Sicherungseinrichtung zurückgezogen ist.

7. Vorrichtung nach einem der vorhergehenden Ansprüche, wobei die Sicherungseinrichtung angeordnet ist, um im Wesentlichen automatisch zu ihrer wirksame Stellung hin auf Bewegung eines Kupplungselements in die Klaue der Vorrichtung bewegt zu werden, und wobei die Beschränkungseinrichtung angeordnet ist, um im Wesentlichen automatisch zu ihrer wirksamen Stellung hin auf Bewegung der Sicherungseinrichtung zu ihrer wirksamen Stellung hin bewegt werden.

8. Verfahren zum Betätigen eines Kupplungselements (8) eines abschleppbaren Fahrzeugs und einer Kupplungsvorrichtung (2), an die das Kupplungselement befestigbar ist, wobei das Verfahren Bewirken, dass das Kupplungselement (8) sich relativ zu der Kupplungsvorrichtung (2) bewegt, um dadurch eine Sicherungseinrichtung (12) der Kupplungsvorrichtung zu bewirken, sich zwischen einer unwirksamen Stellung und einer wirksamen Stellung zu bewegen, in der das Kupplungselement an die Kupplungsvorrichtung befestigt ist, und Bewirken beinhaltet, dass eine Beschränkungseinrichtung Bewegung der Sicherungseinrichtung weg von der wirksamen Position durch ein Beschränkungselement (26) der Beschränkungseinrichtung beschränkt, das sich in eine Öffnung (50) erstreckt, zum Beispiel in die Sicherungseinrichtung,
**dadurch gekennzeichnet, dass**
das Verfahren Führen (32) beinhaltet, wobei Bewegung des Beschränkungselements (26) entlang eines Bewegungswegs (32) geführt wird, um Drehung des Beschränkungselements (26) in eine erste Richtung um eine Achse und Bewegung des Beschränkungselements in die Richtung der Ausdehnung der Achse zu bewirken.

9. Verfahren nach Anspruch 8, das Lösen des Kupplungselements von der Kupplungsvorrichtung durch Bewirken beinhaltet, dass das Beschränkungselement (26) von einer Kupplungsstellung mit der Sicherungseinrichtung wegziehbar ist, wobei das Kupplungselement in einem Verfahren gelöst wird, dass den Schritt des Drehens des Beschränkungselements (26) durch einen Bediener in eine erste Richtung beinhaltet, während das Beschränkungselement sich um die Achse der Drehung weg von der Sicherungseinrichtung bewegt.

## Revendications

1. Dispositif d'attelage (2) comprenant une mâchoire (6) pour recevoir un élément d'accouplement (8) attaché à un véhicule tractable et un moyen d'arrimage (12) pour retenir l'élément d'accouplement (8) dans une position d'arrimage au dispositif d'attelage, dans lequel ledit moyen d'arrimage (12) peut pivoter entre une position efficace dans laquelle il peut retenir l'élément d'accouplement (8) en position et une position inopérante, le dispositif comportant un moyen de restriction pour restreindre le mouvement d'éloignement dudit moyen d'arrimage par rapport à ladite position efficace, ledit moyen de restriction comprenant un élément de restriction (26) agencé de façon à s'étendre dans une ouverture (50), par exemple dans ledit moyen d'arrimage, **caractérisé en ce qu'**un moyen de guidage (32) est prévu pour définir un chemin de déplacement pour ledit moyen de restriction (26), dans lequel ledit chemin de déplacement comprend la rotation dudit moyen de restriction (26) dans une première direction et le mouvement dudit moyen de restriction dans la direction d'extension de l'axe autour duquel le mouvement de rotation se produit.

2. Dispositif selon la revendication 1, qui comprend un moyen d'activation pour activer le mouvement dudit moyen d'arrimage (12) de ladite position inopérante à ladite position efficace, ledit moyen d'activation étant monté à pivotement en vue de son déplacement entre ses positions efficace et inopérante et les axes de pivot dudit moyen d'activation et dudit moyen d'arrimage sont coaxiaux.

3. Dispositif selon la revendication 1 ou 2, dans lequel ledit moyen d'arrimage (12) est sollicité vers sa position inopérante.

4. Dispositif selon l'une quelconque des revendications précédentes, dans lequel ledit élément de restriction (26) dudit moyen de restriction est agencé à l'intérieur d'un alésage et il coopère avec ledit alésage pour définir ledit chemin de déplacement (32), dans lequel soit ledit élément de restriction soit ledit alésage comprend un élément mâle (30) qui est agencé de façon à coopérer avec une piste de guidage (3) associée à l'autre élément, élément de restriction ou alésage.

5. Dispositif selon la revendication 4, dans lequel ladite piste de guidage définit une première position d'arrêt (40) dans laquelle ledit élément de restriction est dans une position pleinement efficace dans laquelle il restreint le mouvement dudit moyen d'arrimage et une deuxième position d'arrêt (72) dans laquelle ledit élément de restriction est rétracté de ladite position pleinement efficace et est empêché de suivre un mouvement de retour jusqu'à ladite première position d'arrêt à moins qu'on ne le fasse tourner, à l'aide d'un moyen d'actionnement, par exemple un moyen formant levier, prévu pour être utilisé par un opérateur pour provoquer le mouvement dudit élément de restriction entre lesdites première et deuxième positions d'arrêt.

6. Dispositif selon la revendication 4 ou 5, dans lequel ledit chemin de guidage (32) définit une troisième position d'arrêt dans laquelle ledit élément de restriction est pleinement rétracté depuis une ouverture dans ledit moyen d'arrimage.

7. Dispositif selon l'une quelconque des revendications précédentes, dans lequel ledit moyen d'arrimage est agencé de façon à se déplacer sensiblement automatiquement vers sa position efficace lors du mouvement d'un élément d'accouplement dans la mâchoire du dispositif et ledit moyen de restriction est agencé de façon à se déplacer sensiblement automatiquement vers sa position efficace lors du mouvement du moyen d'arrimage vers sa position efficace.

8. Procédé d'utilisation d'un élément d'accouplement (8) d'un véhicule tractable et d'un dispositif d'attelage (2) auquel ledit élément d'accouplement peut être arrimé, le procédé comprenant le fait de déplacer l'élément d'accouplement (8) par rapport au dispositif d'attelage (2) pour provoquer de ce fait le pivotement d'un moyen d'arrimage (12) du dispositif d'attelage entre une position inopérante et une position efficace dans laquelle l'élément d'accouplement est arrimé au dispositif d'attelage, causant de ce fait la restriction, par un moyen de restriction, de l'éloignement dudit moyen d'arrimage par rapport à ladite position efficace au moyen d'un élément de restriction (26) dudit moyen de restriction s'étendant dans une ouverture (50), par exemple dans ledit moyen d'arrimage, **caractérisé en ce que** ledit procédé comprend le fait de guider (32) le mouvement de l'élément de restriction (26) qui est guidé le long d'un chemin de déplacement (32) pour provoquer la rotation de l'élément de restriction (26), dans une première direction autour d'un axe et le mouvement de l'élément de restriction dans la direction d'extension de l'axe.

9. Procédé selon la revendication 8, qui comprend le fait de libérer l'élément d'accouplement du dispositif d'attelage en retirant l'élément de restriction (26) d'une position d'accrochage avec ledit moyen d'arrimage, dans lequel ledit élément d'accouplement est libéré dans un procédé qui comprend l'étape où un opérateur fait tourner l'élément de restriction (26) dans une première direction tandis que ledit élément de restriction se déplace autour de l'axe de rotation en s'éloignant dudit moyen d'arrimage.
